# EUROPÄISCHE PATENTANMELDUNG

(11) **EP 3 460 884 A1**
(43) Veröffentlichungstag der Anmeldung: **27.03.2019**
(21) Anmeldenummer: 17191998.8
(22) Anmeldetag: 20.09.2017
(51) Int. Cl.: H01M 4/24, H01M 4/36, H01M 12/06, H01M 12/08, H01M 10/30

(54) **ZINKELEKTRODE**

(71) Anmelder: Justus-Liebig-Universität Gießen, 35390 Gießen (DE)
(72) Erfinder: Dr.Dongmo, Saustin, 35394 Gießen (CM); Prof.Dr.Janek, Jürgen, 35392 Gießen (DE); Dr.-Ing.Schröder, Daniel, 35390 Gießen (DE); Stock, Daniel, 35390 Gießen (DE)
(74) Vertreter: Stumpf, Peter

(57) **Zusammenfassung**

Gegenstand der Erfindung ist eine Zinkelektrode 1 zur Verwendung in einer Zink-Sauerstoff-Batterie oder NiOOH-Zink-Batterie umfasst eine erste Schicht (20) aus Zink und/oder Zinkoxid. Dabei weist die Kohlenstoffelektrode 1 weiterhin eine einen zweite Schicht 30, welche so ausgebildet ist, dass sie zum einen als Anionentauscher dienen kann und zum anderen durchlässig für OH⁻-Ionen ist.

## Beschreibung

### Zinkelektrode

Gegenstand der Erfindung ist eine verbesserte Zinkelektrode zur Verwendung als Anode für Sekundär-Batterien mit einem verbesserten Schutz gegen Formveränderung während der Zyklisierung.

### Beschreibung und Einleitung des allgemeinen Gebietes der Erfindung

Metall-Sauerstoff-Batterien (häufig auch als Metall-Luft-Batterien bezeichnet) sind bereits seit längerem bekannt. Diese enthalten als wesentliche Bestandteile eine negative Elektrode aus z. B. Aluminium, Lithium, Magnesium, Cadmium, Quecksilber, Blei, Eisen oder Zink und eine positive Elektrode, die vorzugsweise aus einem elektronisch leitenden Trägermaterial aus feinteiligem Kohlenstoff besteht, auf welche ein Katalysator zur Sauerstoffreduktion aufgebracht wird. Hierbei sind negative Elektrode und positive Elektrode durch einen Separator, der in Form einer Membran ausgeführt sein kann, getrennt. In einer üblichen Ausführungsform wird Metall, beispielsweise Zink, mit Luftsauerstoff in einem alkalischen Elektrolyten unter Bildung eines Oxides oder Hydroxides oxidiert. Die dabei frei werdende Energie wird elektrochemisch genutzt. Derzeit kommerziell vertriebene Metall-Luft-Batterien sind üblicherweise nicht wieder aufladbar.

### Stand der Technik

Zur Herstellung der elektrochemischen Zellen für Metall-Luft-Batterien werden derzeitig negative Elektrode, Membran und positive Elektrode in der Regel separat hergestellt und dann aufeinander gepresst und in einen umhüllenden Behälter eingebracht.

Metall-Sauerstoff-Zellen enthalten üblicherweise Gasdiffusionselektroden. Es ist bekannt, Gasdiffusionselektroden aus einem elektronisch leitenden, porösen Trägermaterial, beispielsweise aus feinteiligem Kohlenstoff aufzubauen, welches mit Katalysator zur Katalyse der Sauerstoff-Reduktion und Sauerstoffentwicklung beschichtet ist. Es ist weiterhin bekannt, die Gasdiffusionselektrode mit Poren zu versehen, welche im Betrieb mit einem Elektrolytfilm bedeckt sind, der eine vergrößerte Reaktionsfläche für die katalysierte Reaktion im Dreiphasensystem Gas/Flüssigkeit/Feststoff darstellt. Für einen optimalen Betrieb ist hierbei die Grö-ße der Poren und die Hydrophobie bzw. Hydrophilie der verwendeten Materialien von großer Bedeutung, um beispielsweise zu verhindern, dass der Elektrolyt die Poren vollständig füllt, da dieses beispielsweise den Durchfluss von Reaktionsgasen wie Sauerstoff behindern kann.

Eine wirtschaftlich besonders interessante Untergruppe der Metall-Sauerstoff-Batterien sind Zink-Sauerstoff-Batterien (ZSB). Diese besitzen eine mehr als dreifach höhere theoretische spezifische Energiedichte als herkömmliche Lithiumionen-Batterien. ZSB bestehen üblicherweise aus einer Anode mit dem Aktivmaterial Zink, einem Separator und einer bifunktionalen Kathode, an der Sauerstoff beim Entladen der Batterie verbraucht wird bzw. beim Laden der Batterie gebildet wird.

ZSB werden üblicherweise mit einer großen Menge wässrigem Flüssigelektrolyt (hoch-molare Kaliumhydroxid-Lösung) betrieben, um den benötigten Transport von Hydroxid-Ionen zur elektrochemischen Umsetzung von Zink zu im Elektrolyt gelöstem und daher mobilem Zinkat an der Anode zu gewährleisten. In einem weiteren Schritt kann das gebildete Zinkat bei Erreichen der Löslichkeitsgrenze zu ZnO ausfallen.

Die hohe Diskrepanz zwischen praktisch erreichter und theoretisch erreichbarer Energiedichte (250 Wh/kg gegenüber 1300 Wh/kg) für Zink-Sauerstoff-Batterien (ZSB), die gleichzeitig relativ niedrigen Leistungsdichten, sowie die sehr geringen Zyklenzahlen für das elektrische Wiederaufladen motivieren die aktuellen Forschungs- und Entwicklungsanstrengungen zu ZSB. Das Hauptaugenmerk wird dabei auf die Optimierung der einzelnen ZSB-Komponenten gelegt, welche an sich auch stets Herausforderungen für die Gesamtzelle darstellen.

Die derzeit erreichten Zyklenzahlen für das vollständige elektrische Entladen und Laden von ZSB reichen aber bei weitem nicht an die Zyklenzahlen von Lithiumionen-Batterien heran. Im Allgemeinen führen Degradationsvorgänge, wie bspw. die irreversible Formveränderung der Anode oder Dendritenbildung an der Anode zur Verminderung der erreichbaren Lade- und Entladezyklen. Die Lade- bzw. Entlade-Kapazität eines Zyklus entspricht in diesem Sinne sinnvollerweise der Kapazität die benötigt wird, um eine vollständige Umsetzung der eingebrachten Menge an Aktivmaterial Zink zu gewährleisten, kann aber auch geringer ausfallen.

Das US Patent 2015/0155559 A1 schlägt ein OH⁻-leitendes Polymer zur Verwendung in alkalischen Batterien vor, um vor allem OH⁻ zwischen Anode und Kathode zu leiten. Dies löst das Problem der irreversiblen Formveränderung jedoch nicht.

Technologisch wird dabei an der Anode eine elektrisch hoch leitfähige Struktur (Zink elektrochemisch auf Nickel- oder Kupfer-Schäumen abgeschieden) oder eine komplett aus Zink bestehende, schwammartige Elektrode vorgeschlagen. Beispielsweise werden dabei Zink-Schaum und Additive im Flüssig-Elektrolyt (z.B. mit Propylene-Carbonat oder Ca(OH)₂) verwendet, um die Löslichkeit von Zinkat im Füssig-Elektrolyt herabzusetzen und somit das Ausfallen von Zinkat zu ZnO direkt am Stromabnehmer der Anode zu forcieren.

Die Formänderung der Anode ("shape change") kann durch Einsetzen von Schaumstrukturen und Additiven im Elektrolyt aber nicht vollständig verhindert werden. Zudem haben Schaum-Strukturen den Nachteil, dass sie nicht vollständig entladen werden können, da ein Grundgerüst aus Zink übrigbleiben muss. Additive im Elektrolyten rufen zudem weitere unerwünschte Nebenreaktionen hervor.

### Aufgabe

Aufgabe der Erfindung ist es, die Nachteile des Standes der Technik zu vermeiden, sodass sich das beim Entladen einer Zink-Anode entstehende Zinkat nicht im Elektrolyt lösen kann und somit für das sich anschließende Aufladen der Anode direkt an Ort und Stelle wieder zur Verfügung steht, um zurück zu Zink umgewandelt zu werden.

### Lösung der Aufgabe

Die Lösung dieser Aufgaben ergibt sich aus den Merkmalen des Hauptanspruchs. Weiterhin sind vorteilhafte Ausgestaltungen und Weiterbildungen der Erfindung den Unteransprüchen zu entnehmen.

Die erfindungsgemäße Zinkelektrode 1 zur Verwendung als Sekundär-Anode in einer Zink-Sauerstoff-Batterie oder NiOOH-Zink-Batterie umfasst eine erste Schicht 20 aus Zink und/oder Zinkoxid. Weiterhin umfasst die Elektrode 1 eine zweite Schicht 30, welche so ausgebildet ist, dass sie zum einen als Anionentauscher dienen kann und zum anderen durchlässig für OH⁻ Ionen ist, wenn sie sich in einem Elektrolyten 40 befindet. Dabei deckt die zweite Schicht 30 die erste Schicht 20 vorzugsweise vollständig. Die Zinkstoffelektrode 1 ist damit so ausgebildet, dass die in einer Zink-Sauerstoff-Batterie oder NiOOH-Zink-Batterie als elektrisch wiederaufladbare Anode dienen kann. Die erste Schicht 20 kann dabei beispielsweise als ein Draht oder eine dünne Folie ausgebildet sein.

Die zweite Schicht 30 weist hierbei bevorzugt eine gleichmäßige Dicke auf. Es ist zu empfehlen, eine homogene Schicht zu verwenden.

Die zweite Schicht besteht dabei vorzugsweise aus einem Ionomer-Grundgerüst beladen mit OH⁻ Ionen. Ihre Schichtdicke liegt bevorzugt bei 1 µm bis 100 µm. Die Leitfähigkeit bezogen auf OH⁻ Ionen liegt bei bevorzugt 10 bis 100 mS/cm. Durch diese gezielte Elektrodenstrukturierung und den Schutz der Elektrode über einen Anionentauscher kann so die Formveränderung der Elektrode gezielt minimiert werden. Die zweite Schicht 30 verhindert, dass Zinkat-Ionen frei in das Elektrolyt-Reservoir diffundieren können, weil durch die zweite Schicht 30 sich das bei der Verwendung der Batterie entstehende Zinkat direkt wieder auf dem Aktivmaterial abscheiden kann.

In einer zweiten Ausführungsform der erfindungsgemäßen Zinkelektrode 1 weist diese einen elektrisch leitfähigen, faserförmigen Kern 10 bevorzugt aus Kohlenstoff auf. Der Kern 10 ist dabei unter der ersten Schicht 20 aus Zink und/oder Zinkoxid eingebracht. Hierbei handelt es sich vorzugsweise um einen elektrisch leitfähigen, faserförmigen Kern aus Grafit. Es ist jedoch auch möglich ein anderes leitfähiges Material wie bspw. Kupfer, Nickel, Zinn oder Gold zu verwenden. Dieser Kern dient zur mechanischen Stabilisierung und besseren elektrischen Kontaktierung der Elektrode. Weiter erlaubt er es das verwendete Zink effizienter zu nutzen. Die Schichtdicke der ersten Schicht 20 liegt in dieser Ausführungsform bei 1 µm bis 500 µm.

In einer dritten Ausführungsform der erfindungsgemäßen Zinkelektrode 1 umfasst diese weiterhin zusätzlich zur Schicht 20 aus Zink und/oder Zinkoxid 10 zusätzlich eine Schicht 50 aus inertem Material. Inert bedeutet, dass dieses Material chemisch und elektrochemisch nicht aktiv ist. Die Schicht 50 aus inertem Material ist dabei zumindest abschnittsweise zwischen Schicht 20 und der Schicht 30 angeordnet. Sie dient dazu erhöhte mechanische Stabilität der Zinkelektrode 1 zu erhalten. Die Schichtdicke der Schicht 50 aus inerten Material hierbei beträgt bevorzugt 1 µm bis 50 µm. Bevorzugte Materialen für diese Schicht sind chemisch inerte Polymere wie z.B. PTFE. Diese Schicht kann alternativ oder in Kombination zu einem Kern 10 eingesetzt werden.

Diese Schicht 50 ist für OH⁻ Ionen durchlässig ausgebildet. Dazu ist sie beispielsweise netzförmig ausgebildet und/oder weist Poren geeigneter Größe auf.

### Herstellungsverfahren:

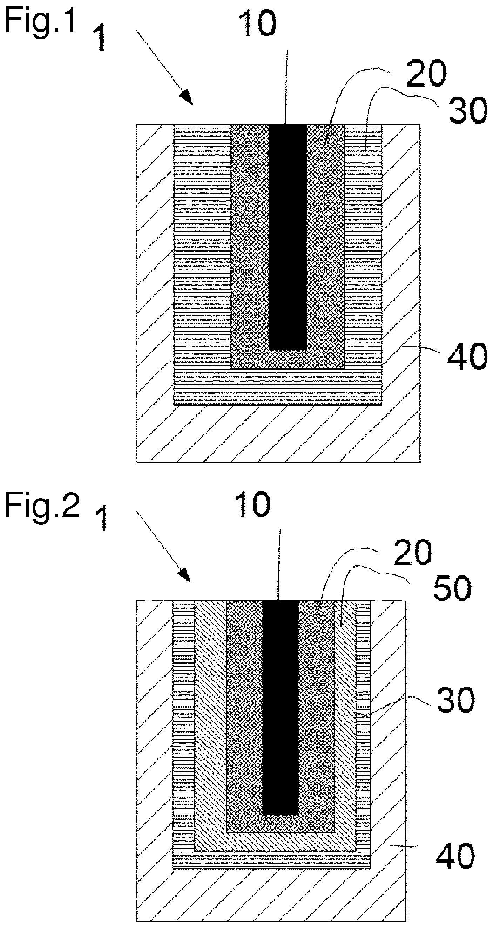

Ein mögliches Herstellungsverfahren für die erfindungsgemäße Zinkelektrode 1 besteht darin, dass zunächst auf einer elektrisch leitfähigen und chemisch stabilen Kohlenstoff-Faser elektrochemisch Zinkoxid oder Zink abgeschieden wird. Anschließend eine Ummantelung mit einem OH⁻-leitfähigen Anionentauscher (z.B. AS-4 der Fa. Tokuyama). Dies wird beispielsweise durch Dip-Coating erreicht. Die resultierende Zinkelektrode 1 kann jetzt in einem Elektrolyten eingesetzt werden (siehe Abbildungen Fig.1 und Fig.2). Somit wird forciert, dass die Zinkat-Ionen direkt in der Zwischenschicht zwischen elektrisch leitfähigem Material und Anionentauscher-Mantel verbleiben und nicht in den Elektrolyten gehen.

### Ausführungsbeispiel

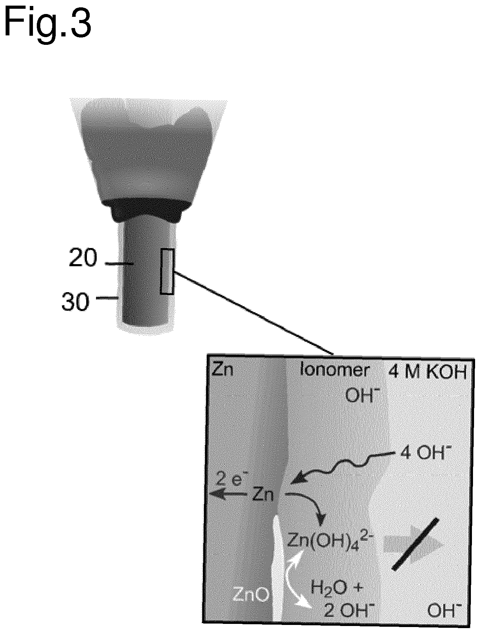

Exemplarisch wurde das Schutzkonzept an einem Zinkdraht, d.h. mit (Probe 1) und ohne (Probe 2) Verwendung einer zweiten Schicht 30 (hier eine lonomer-Schicht) und getestet. Dabei wurde der Zinkdraht in eine Lösung (5 wt% des Anionentauscher-lonomers AS-4 der Fa. Tokuyama in 2-Propanol) getaucht und so durch Dip-Coating eine Schicht von ca. 5 µm Dicke auf den Zinkdraht gebracht. Beide Proben wurden mittels Zyklovoltammetrie über mehrere Zyklen elektrochemisch vermessen. Die erhaltenen Ergebnisse sind in Abbildung 3 gezeigt.

Es ist deutlich zu erkennen, dass der Zinkdraht ohne zweite Schicht 30 (Probe 1) nur für wenige Zyklen verwendet werden konnte, bevor sich das Zink vollständig zu Zinkat umgewandelt hat und vollständig im Elektrolyt-Reservoir in Lösung gegangen ist. Im Vergleich dazu konnte die Anode mit einer zweiten Schicht 30 (Probe 2) deutlich länger stabil verwendet werden. Dies war sowohl bei einem Reduktion-Strom bei einem Potential von 1.4 V gegen eine Hg/HgO-Referenzelektrode als auch bei einem Oxidations-Strom bei einem Potential von - 1.1 V gegen eine Hg/HgO-Referenzelektrode der Fall. Dabei blieb auch mehr Elektrodenmaterial erhalten. Das ist in der Abbildung Fig.3 bis Zyklus 28 zu erkennen.

Die erfindungsgemäße Zinkelektrode wird bevorzugt in einer Zink-Sauerstoff-Batterie oder einer NiOOH-Zink-Batterie verwendet. Die zweite Schicht 30, die als Anionentauscher wirkt, führt zu einer Verlängerung der Lebensdauer dieser Batterien mit alkalischem Elektrolyt, weil die Anode länger ihre Form beibehält. Das wird dadurch bewirkt, dass durch die zweite Schicht 30 sich das bei der Verwendung der Batterie entstehende Zinkat direkt wieder auf dem Aktivmaterial abscheiden kann.

### Abbildungslegenden und Bezugszeichenliste

Fig.1 schematische Darstellung einer Ausführungsform des erfindungsgemäßen Zinkelektrode 1 mit einem Kohlenstoffkern 10 in einem Elektrolyten 40
Fig.2 schematische Darstellung einer Ausführungsform des erfindungsgemäßen Zinkelektrode 1 mit einem Kohlenstoffkern 10 und einer Schicht 50 aus inertem Material in einem Elektrolyten 40
Fig. 3 Schematische Zeichnung des Konzeptes zur Verhinderung der Formänderung der Zink-Anode beim Entladen: ein elektrisch leitfähiger Kern 10 wird mit einer ersten Schicht 20 aus dem Aktivmaterial Zink (oder Zinkoxid) versehen und mit einer mehreren µm dicken zweiten Schicht 30 aus OH⁻-leitfähigem Anionentauscher ummantelt.

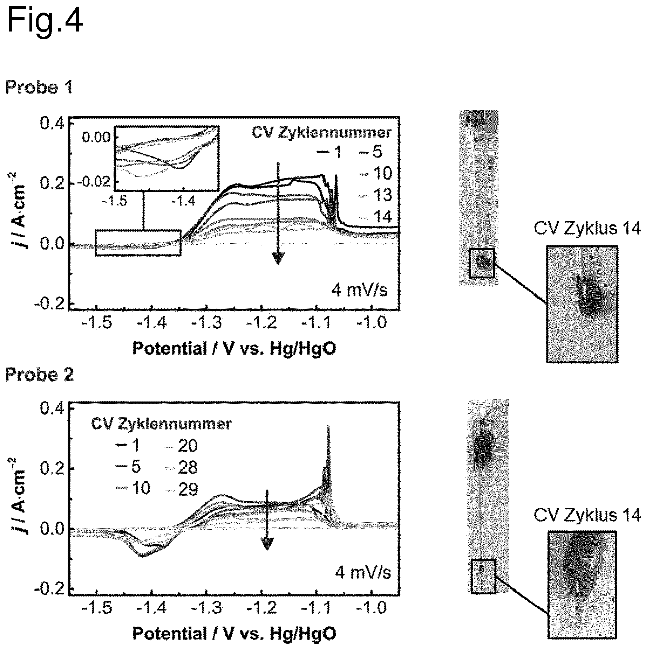

Fig. 4: Schematische Zeichnung der beiden untersuchten Proben (links); Ergebnisse der elektrochemischen Untersuchungen mittels Zyklovoltammetrie (Probe 1 bzw. 2 als Arbeitselektrode, Hg/HgO-Referenzelektrode, Pt-Draht als Gegenelektrode, elektrochemische Zelle mit 4 M KOH als Elektrolyt) über mehrere Zyklen (Mitte); und optische Aufnahme von Probe 1 und Probe 2 jeweils nach 14 Zyklen (rechts).

### Bezugszeichenliste

1 Zinkelektrode
10 Kern
20 erste Schicht
30 zweite Schicht
40 Elektrolyt
50 Schicht aus inertem Material

## Patentansprüche

1. Zinkelektrode (1) zur Verwendung in einer Zink-Sauerstoff-Batterie oder NiOOH-Zink-Batterie umfassend eine erste Schicht (20) aus Zink und/oder Zinkoxid **dadurch gekennzeichnet, dass** die Zinkstoffelektrode (1) eine zweite Schicht (30) aufweist, welche die erste Schicht (20) vollständig bedeckt und so ausgebildet ist, dass sie zum einen als Anionentauscher dienen kann und zum anderen durchlässig für OH- Ionen ist.

2. Zinkelektrode (1) gemäß Anspruch 1 **dadurch gekennzeichnet, dass** die Dicke der zweiten Schicht (30) zwischen 1 µm und 100 µm beträgt.

3. Zinkelektrode (1) gemäß Anspruch 1 oder 2 **dadurch gekennzeichnet, dass** sie einen elektrisch leitfähigen Kern (10) umfasst, in welchen die erste Schicht (20) eingebettet ist.

4. Zinkelektrode (1) gemäß Anspruch 3 **dadurch gekennzeichnet, dass** die Dicke der ersten Schicht (10) zwischen 1 µm und 500 µm beträgt.

5. Zinkelektrode (1) gemäß einem der vorigen Ansprüche **dadurch gekennzeichnet, dass** sie eine Schicht (50) aus inertem Material umfasst, wobei diese zumindest abschnittsweise zwischen der ersten Schicht (20) und der zweiten Schicht (30) angeordnet ist.

6. Zinkelektrode (1) gemäß Anspruch 5 **dadurch gekennzeichnet, dass** die Schichtdicke der Schicht (50) aus inerten Material zwischen 1 µm und 50 µm beträgt.

7. Batterie **dadurch gekennzeichnet, dass** diese eine Zinkelektrode (1) gemäß einem der vorigen Ansprüche umfasst.
